# EUROPÄISCHE PATENTSCHRIFT

(11) **EP 0 379 015 B1**
(45) Veröffentlichungstag und Bekanntmachung des Hinweises auf die Patenterteilung: **21.04.1993**
(21) Anmeldenummer: 90100247.7
(22) Anmeldetag: 06.01.1990
(51) Int. Cl.: B01F 3/04, B29B 7/76

(54) **Verfahren zum Beladen mindestens einer Komponente mit Gas bei der Herstellung von massiven bis zelligen Kunststoffen**
Method for charging at least one component with a gas in the gas production of solid or cellular plastics
Procédé pour charger au moins un composant avec du gaz dans la fabrication des matières plastiques massives ou cellulaires

(30) Priorität: 19.01.1989 DE 3901462
(43) Veröffentlichungstag der Anmeldung: 25.07.1990
(73) Patentinhaber: BAYER AG, 51368 Leverkusen (DE)
(72) Erfinder: Krippl, Kurt, D-4019 Monheim (DE); Schulte, Klaus, Dipl.-Ing., D-5090 Leverkusen 1 (DE)

(56) Entgegenhaltungen:
- EP-A- 0 110 244
- DE-C- 807 385
- US-A- 3 108 146
- US-A- 4 240 618
- PATENT ABSTRACTS OF JAPAN, page 477 M 77; & JP-A-52 7066 (KOMATSUGAWA KAKOKI K.K.) 19-01-1977

## Beschreibung

Die Erfindung betrifft ein Verfahren zum Beladen mindestens einer fließfähigen Komponente mit Gas bei der Herstellung von massiven bis zelligen Kunststoffen aus mindestens zwei fließfähigen Reaktionskomponenten, wobei das Gas einem in einem Begasungsbehälter angeordneten Hohlrührer außerhalb des Begasungsbehälters dosiert zugeführt, von ihm angesaugt und in dem unter Druck stehenden Begasungsraum des Begasungsbehälters in die Komponente eindispergiert wird.

Zum Erzielen bestimmter Eigenschaften derartiger Kunststoffe ist es erforderlich, mindestens eine Komponente mit Gas, beispielsweise Luft, zu beladen. Die Qualität der gewünschten Eigenschaften im Endprodukt hängt sehr wesentlich von der Dispergierung und Homogenisierung des Gases in der Komponente ab. Insbesondere finden derartige Verfahren bei der Herstellung von vorzugsweise geschäumten Polyurethan-Kunststoffen, Polyisocyanurat-Kunststoffen und Polyharnstoff-Kunststoffen Anwendung. Aus DE-A-34 34 443 ist es bekannt, das Gas in einem mit einem Hohlrührer versehenen Begasungsbehälter in die Komponente einzudispergieren, wobei dieser Begasungsbehälter in einer vom Vorratsbehälter zum Mischkopf führenden Leitung zwischengeordnet ist. Die Rührflügel des Hohlrührers und/oder dessen Rührerdrehzahl sind einstellbar, damit eine gewünschte Gasmenge pro Zeiteinheit angesaugt werden kann.

Weitere Begasungsverfahren mit Hohlrührer sind aus EP-A-110 244, EP-A-175 252 und DE-A-3 434 444 bekannt.

Allen diesen Verfahren haftet der Mangel an, daß die Dispergierung und Homogenisierung des Gases in der Komponente nicht ausreichend ist, was sich insbesondere bei der Begasung hochviskoser Komponenten und schwerlöslicher Gase bemerkbar macht.

Es besteht die Aufgabe, das Verfahren der eingangs genannten Art dahingehend zu verbessern, daß der Dispergierungsgrad des Gases in der Komponente und die Lösungsgeschwindigkeit erhöht werden und daß es insbesondere auch für höherviskose Komponenten mit gutem Erfolg anwendbar ist.

Diese Aufgabe wird dadurch gelöst, daß der Hohlrührer mit einer größeren Gasmengen-Durchsatzleistung (Nl/min) betrieben wird als der ihm über ein Gasdosiergerät angebotenen Gasmenge (Nl/min) entspricht.

Auf diese Weise wird eine höhere Druckdifferenz (Unterdruck) am Hohlrührer erzielt, wodurch eine schnellere und homogenere Aufnahme des Gases durch die Komponente und damit eine höhere Löslichkeit in ihr bewirkt wird. In der Regel wird man gegenüber den bekannten Verfahren zum Erzielen der größeren Gasmengen-Durchsatzleistung eine konstante, höhere Drehzahl vorgeben. Die gleiche Wirkung würde durch eine entsprechende Veränderung der Stellung oder der Länge der Rührflügel erzielt, was jedoch technisch aufwendiger wäre.

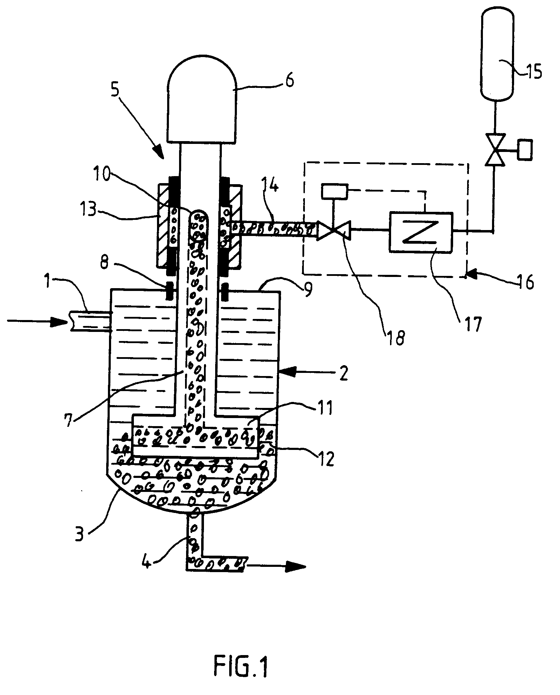

In der Zeichnung ist eine Vorrichtung zur Durchführung des neuen Verfahrens rein schematisch im Schnitt dargestellt und nachstehend näher erläutert:

Von einem nicht dargestellten Vorratsbehälter wird Polyol als Komponente über eine Leitung 1 in einen geschlossenen Begasungsbehälter 2 in dessen oberen Bereich eingeführt, von dessen Boden 3 eine Leitung 4 zu einem nicht dargestellten Mischkopf führt, in welchem das mit Gas beladene Polyol mit Isocyanat als weitere Komponente vermischt wird. Aus dem Gemisch bildet sich nach Verlassen des Mischkopfes Polyurethan-Schaumstoff. Das Rührwerk 5 besteht aus einem drehzahlverstellbaren Antriebsmotor 6 und einem Hohlrührer 7, welcher mittels einer Dichtung 8 durch den Behälterdeckel 9 geführt ist. Außerhalb des Rührwerkbehälters 2 weist der Hohlrührer 7 eine Ansaugöffnung 10 auf, welche mit an den Enden der Rührarme 11 vorgesehenen Öffnungen 12 verbunden ist. Im Bereich der Ansaugöffnung 10 ist der Hohlrührer 7 durch ein Gehäuse 13 umgeben, in welches eine Gaszuführleitung 14 mündet. Diese steht mit einer Gasquelle 15 in Verbindung. In der Leitung 14 ist ein Gasdosiergerät 16 angeordnet, welches aus einem Gasmasse-Durchflußmesser 17 und einem Gasdurchflußmengen-Regelventil 18 besteht. Sowohl das Polyol als auch das Gas werden kontinuierlich in konstantem Strom zugeführt und das Gemisch abgeführt. Das Rührwerk 5 arbeitet mit konstanter Drehzahl, wobei diese so eingestellt ist, daß eine größere Gasmengen-Durchsatzleistung erzielt wird als der durch das Gasdosiergerät 16 angebotenen Gasmenge entspricht.

### Beispiel

Der Begasungsbehälter 2 besitzt ein Volumen von 2 l. Er steht unter einem Arbeitsdruck von 3 bar. Der Hohlrührer 7 arbeitet mit 3000 U/min, was einer Ansaugleistung von 10 Nl/min entspricht. Die vom Gasdosiergerät 16 angebotene Gasmenge, in diesem Falle Luft, beträgt jedoch nur 5 Nl/min. Dadurch wird eine Saugwirkung (Druckdifferenz) von 0,4 bar erzeugt. Es werden 6 l/min Polyol zugeführt. Die mittlere Verweilzeit des Polyols im Rührwerksbehälter 2 beträgt 20 sec. Das begaste Polyol zeigt einen Blasengehalt von 27 Stück/cm² bei einer mittleren Blasengröße von 0,9 mm.

## Patentansprüche

1. Verfahren zum Beladen mindestens einer fließfähigen Komponente mit Gas bei der Herstellung von massiven bis zelligen Kunststoffen aus mindestens zwei fließfähigen Reaktionskomponenten, wobei das Gas einem in einem Begasungsbehälter (2) angeordneten Hohlrührer (7) außerhalb des Begasungsbehälters (2) dosiert zugeführt, von ihm angesaugt und in dem unter Druck stehenden Begasungsraum des Begasungsbehälters (2) in die Reaktionskomponente eindispergiert wird, dadurch gekennzeichnet, daß der Hohlrührer (7) mit einer größeren Gasmengen-Durchsatzleistung (Nl/min) betrieben wird als der ihm über ein Gasdosiergerät (16) angebotenen Gasmenge (Nl/min) entspricht.

## Claims

1. A process for the charging of at least one free-flowing component with gas in the preparation of solid to cellular plastics made from at least two free-flowing components, wherein the gas is introduced to a hollow stirrer (7) located inside a mechanical blowing unit (2), in amounts metered outside the mechanical blowing unit (2), is drawn out of it and dispersed in the reaction components in the pressurised blowing chamber of the mechanical blowing unit (2), characterised in that the hollow stirrer (7) is operated at a higher gas output rate (Nl/min) than corresponds to the amount of gas (Nl/min) supplied to it via a gas metering device (16).

## Revendications

1. Procédé pour charger d'un gaz au moins un composant fluide dans la production de matières plastiques massives ou cellulaires à partir d'au moins deux composants réactionnels fluides, dans lequel le gaz est amené en quantités dosées à l'extérieur du récipient (2) d'absorption de gaz à un agitateur (7) à arbre creux disposé dans le récipient (2), il est aspiré dans ce récipient et il est incorporé par dispersion dans le composant réactionnel dans l'espace d'absorption de gaz sous pression du récipient (2), caractérisé en ce qu'on fait fonctionner l'agitateur (7) à arbre creux à un plus grand débit (Nl/min) de gaz que cela ne correspond à la quantité de gaz (Nl/min) qui y est offerte au moyen d'un appareil doseur de gaz (16).
